# EUROPEAN PATENT SPECIFICATION

(11) **EP 1 713 003 B1**
(45) Date of publication and mention of the grant of the patent: **21.11.2007**
(21) Application number: 05102937.9
(22) Date of filing: 14.04.2005
(51) Int. Cl.: G06F 13/12, H04L 12/56

(54) **Measurement device with measurement data buffer**
Messvorrichtung mit Messdatenpuffer
Dispositif de mesure avec tampon de données de mesure

(43) Date of publication of application: 18.10.2006
(73) Proprietor: Agilent Technologies, Inc., Santa Clara, CA 95051 (US)
(72) Inventor: KAASE, Rolf, 76137, Karlsruhe (DE); SEIFRIED, Martin, 76275, Ettlingen (DE); WINTER, Wolfgang, 76187, Karlsruhe (DE); STEINMETZ, Sven, 76133, Karlsruhe (DE); STEMER, Peter, 76337, Waldbronn (DE)
(74) Representative: Barth, Daniel Mathias

(56) References cited:
- EP-A- 1 246 409
- DE-A- 19 917 353
- US-A- 4 941 089
- US-A- 5 524 218
- US-A1- 2004 156 315

## Description

### BACKGROUND ART

The present invention relates to a measurement device with a measurement data buffer.

Known controllable measurement devices allow to carry out a measurement and may comprise a user interface allowing to control the measurement and to read out the measurement result data. A measurement device may physically incorporate such a user interface, or may (as disclosed in EP 1469301 A1 by the same applicant Agilent Technologies) provide such a user interface by a computer system as a controller device that may be coupled to the analysis device through a network or otherwise. DE 19917353 discloses a controller device for controlling a coupled measurement device according to the preamble of claim 1.

### DISCLOSURE OF THE INVENTION

It is an object of the invention to provide an improved way of performing of a measurement. The object may be solved by the independent claims. Exemplary embodiments are shown by the dependent claims.

According to an exemplary embodiment of the present invention, a measurement device for performing an analysis is provided. The measurement device may comprise a storage unit for storing acquired measurement data as complete sets of data, including administrative and history information about the analysis data. In other words, one embodiment of the invention may allow storing and retrieving complete sets of measurement results data independently from the infrastructure. The analysis data may be transmittable to a coupled controller device. The measurement device may also comprise a processor that provides the controller device with information about the results data stored on the storage device. After receiving a specific data availability request from the controller device about the results data stored in the storage device and available for transmission, the measurement device may transmit the requested information. The controller device(s) can then request transmission of a specific results data block or data set. After transmission to the coupled controller device, the measurement or analysis data sets can then be processed in terms of further data analysis and/or data reduction.

According to another exemplary embodiment of the present invention, a controller device for controlling a coupled measurement device for performing a measurement is provided. The controller device may comprise a receiving unit for receiving measurement data transmitted from the measurement device, a transmission interruption detection unit for detecting an interruption during the transmission of measurement data from the measurement device, and a data availability request unit that transmits a data availability request to the measurement device requesting information about measurement data available for transmission, in case the transmission interruption detection unit has detected an interrupted data transmission.

According to still another exemplary embodiment of the present invention, a communication link is provided that may allow the measurement device with the above-mentioned features and a controller device with the above-mentioned features to communicate in terms of controlling the measurement device coupled to the controller device and transmitting the data.

According to yet another exemplary embodiment of the present invention, a method of operating a measurement device capable of performing a measurement is provided, the method comprising the steps of storing complete sets of acquired measurement data including administrative and history information about the measurement data, wherein the measurement data is transmittable to a coupled controller device, and, upon receiving an availability request of the controller device related to stored measurement data available for transmission, providing the controller device with information in accordance with the availability request based on a retraceable order according to which measurement data may be stored.

According to still another exemplary embodiment of the present invention, a computer-readable medium is provided, in which a computer program for operating a measurement device is stored which, when being executed by a processor, is adapted to control or carry out the above-mentioned method steps.

According to another exemplary embodiment of the present invention, a program element of operating a measurement device is provided, which, when being executed by a processor, is adapted to control or carry out the above-mentioned method steps.

Embodiments of the invention can be partly or entirely embodied or supported by one or more suitable software programs, which can be stored on or otherwise provided by any kind of data carrier, and which might be executed in or by any suitable data processing unit. According to an embodiment of the invention, the measurement or analysis scheme can be implemented by a computer program, i.e. in software, or by using one or more special electronic optimization circuits, i.e. in hardware, or in hybrid form, i.e. by means of software components and hardware components.

One exemplary aspect of the invention can be seen in the fact that a mass storage buffer or storage device is provided in the measurement device itself. The acquired measurement data may be stored in the storage device along with records for date and time of receipt, acquisition history and storage information about the particular piece of measurement data. In other words, the order of storage of measurement data as well as complete analysis or measurement data sets may be retraced from the storage scheme.

An embodiment of the invention provides a means to handle undesired interruptions of the coupling or connection between the measurement device and the controller device that may disturb the proper continuous transmission of measurement data from the measurement device to the controller device during the measurement or analysis.

Specifically, an embodiment of the invention provides a mechanism that prevents data loss resulting from such an interruption. Such an embodiment of the invention ensures that measurement data which have been transmitted before and after the interruption and which are related to a particular measurement or analysis can still be used by the controller device in a reasonable manner, since the complete set of data related to one measurement or analysis is still available for retransmission from the storage device contained in the measurement device itself. The described embodiment of the invention may prevent that a single failure in the infrastructure or computer results in an interruption and subsequent loss of data points which otherwise might render the entire analysis or measurement useless.

According to embodiments of the invention, it is possible in the described scenario that a measurement or analysis is completed and its result stored successfully even after the coupling or connection to the controller has been interrupted. After eliminating the interruption of the connection, the controller detects the occurrence of an interruption of the data transmission path. The controller device may send a data availability request to the measurement device. The controller device may request the measurement device to provide information whether and/or which analysis or measurement data (which possibly have not been transmitted properly due to the interruption of the transmission path) are available for transmission from the storage buffer unit of the measurement device. The measurement device, in response to the availability request, may provide the controller device with information which measurement data are still available or whether a specified portion of measurement data is still available. In response to an availability request, the measurement device may also provide the controller device directly with a specified portion of the measurement data, without any additional communication.

For instance, the controller device can provide the measurement device with an address of the last measurement data, which has been transmitted correctly before the interruption, and/or with an address of the first measurement data that has been transmitted correctly after reestablishment of the transmission path. Then, under consideration of the derivable chronology of the acquisition of the measurement data, the measurement device may check whether the requested item of measurement data is still stored in the mass storage device and may be sent to the controller device again to complete the measurement data there. Consequently, missing portions of a set of measurement data may be delivered belatedly. In this case, it may be necessary for the controller to request the measurement device to resend the full set of measurement data.

Therefore, the operation of the measurement device according to the described embodiment of the invention may be less prone to failure and may allow to reliably and securely read out measurement data by a controller device, even in a scenario in which the controller device is located remotely and connected via network or some other physical communication path to the measurement device. Thus, even when the measurement data is transmitted via a communication path that is susceptible to failures, the buffering of measurement data may guarantee a proper measurement data transmission between measurement device and controller device.

The measurement device may, but does not necessarily have implemented the functionality of detecting, by itself, that an error in the transmission path has occurred. The latter alternative allows to manufacture the measurement device with low cost, since it is not required in this case that (sophisticated) error detection intelligence is included in the measurement device. The error detection may be carried out by the controller device, which may have implemented a transmission interruption detection unit capable of detecting an interruption of the data flow between the measurement device and the controller device. This may be detected in the controller device by the recognition that an expected and not yet finished measurement data stream has been interrupted. However, a problem in the transmission path may also be detected by periodically exchanging status requests or signals between controller device and measurement device, when the sequence of received status request responses or signals is suddenly interrupted. In such an event, an availability request may be triggered by the transmission interruption detection unit and may be generated by the availability request unit.

Thus, the error detection concerning an occurring problem in the transmission path may be detected on the side of the controller device, but it is also possible that the error detection intelligence is partly or entirely integrated in the measurement device.

According to one aspect of the invention, a measurement device with built-in mass storage for buffering multiple analysis or measurement data sets is provided. Such a measurement device may be a lab device that produces data, which gets acquired by software running on any computer in a network. The analytical instrument or measurement device according to an aspect of the invention may produce sets of analytical data that may be acquired by controller software running on a computer connected to instruments through a network or other means. According to an embodiment of the invention, a fail-safe mechanism for measurement data independent from the stability of a network or controlling software is provided to thereby ensure data availability and data integrity of the analysis data generated by the measurement device.

According to an exemplary embodiment of the invention, an instrument mass storage is implemented. Analytical instruments may create a continuous stream of data during acquisition. Instrument control systems may require that the connection between the instrument and an instrument controller is always active to ensure that all of the acquired data is really transmitted to the controller, without data loss.

According to one aspect of the invention, a LAN-based (local area network) communication between measurement device and controller device may be performed, for instance using the TCP/IP protocol standard. TCP/IP particularly provides mechanisms for reliable, error-free data transfer on a packet level, but requires a working and correctly configured network infrastructure (for instance physical and logical connection such as intact wiring, working and correctly configured switches, servers, name resolution, address assignments, etc.). A mechanism may be provided according to the described embodiment of the invention ensuring that instrument data is not lost even if the explained infrastructure fails. This mechanism may protect the data integrity of measurement data generated by the analytical instrument. A corresponding system of data acquisition may allow to compensate for network and/or infrastructure failures without data loss by buffering the acquisition on the internal mass storage of the measurement device.

Particularly, for a short-term network outage (for instance ranging from seconds to minutes, but usually shorter than the actual run time of an analysis), the system may automatically and transparently reconnect to the controller and may upload all buffer data without user intervention. For a long-term network outage (for instance remaining from minutes to hours, regardless of the actual measurement time), the system may store all instrument measurement data within the instrument and may allow a system controller to reconnect and download the buffered data from the instrument. Thus, instrument data acquisition may be made more trustworthy, reliable and failure safe.

A system according an embodiment of the invention may allow to correct improper data transmission by allowing selective re-transmission of missing or corrupted data portions being from data buffered in the storage unit, thus preventing data loss due to an interrupted connection.

The storage device may store measurement data not only of a single measurement but until the memory capacity is exhausted. Only then, measurement data may be overwritten. Then, a control device may have random access to any part of the data stored in the storage device (for instance may request transmittal of all data starting from a particular address onwards).

Therefore, a measurement device being operated with a controller device in a communication network may be efficiently protected against communication infrastructure failures or errors. According to the data management architecture in a measurement device according to an exemplary embodiment of the invention, acquired data may be continuously transmitted from the storage unit to an interface of the measurement device connectable in a wired or wireless manner to a controller device. In case of any problem in the data transmission path between measurement device and controller device, a history or an order of storing measurement data in the storage unit of the measurement device (for instance in the form of chronology data) can be used to determine whether missing data are still available for transmission. In other words, a kind of directory or index may be stored in the storage unit, or may be derivable from a particular order or policy according to which measurement data are to be stored in the storage device.

The term "measurement device" according to this specification may particularly denote any kind of apparatus, which serves or is used to perform any kind of measurement, or to detect any measurable parameter, or to carry out any kind of investigation of an analyte to be examined. For instance, a measurement may be a (bio)chemical analysis of a liquid or gaseous sample to be characterized regarding its composition or identity.

"Measurement data" resulting from such a measurement may be raw experimental data, or partially evaluated or processed data, or fully processed data already containing a desired measurement information. Thus, "measurement data" provided by a measurement device according to the above kind may still have to be processed completely or partially, or may be already completely processed so that no further post-processing is necessary.

The storage unit may be any kind of storage medium like a flash memory, a RAM memory, a ROM memory, an EEPROM, an FRAM memory, an SRAM memory, an MRAM memory, or the like. Particularly, the storage unit may be realized as a compact memory card (for instance a flash card) or a USB stick, or any kind of replaceable cartridge that is contained in the analysis device.

When an error has been detected in the communication path between measurement device and controller device, a possible consequence may be not only that an availability request is sent. Additionally or alternatively, the measurement device can also be provided with a command message instructing the measurement device to increase the duration of the measurement procedure (for instance for compensating a measurement data transmission pause resulting from the interruption) or to pause the measurement data acquisition (for instance until the interruption is over).

The controller device may provide the measurement device, in the context of the availability request, with a position in the stream of measurement data characterizing the point at which the data transfer has been interrupted. For instance, such a position may be defined by a read pointer pointing to a particular starting position of measurement data possibly stored in the storage unit of the measurement device at which starting position the supplementary transmission should start.

Furthermore, upon receipt of the availability request, the measurement device may react, if possible in the frame of the presently performed measurement, by delaying or interrupting the currently performed measurement procedure. Thus, a memory overflow in the storage unit may be avoided. This may prevent the system from unintentionally overwriting previously acquired and stored data which are still of interest.

Chronology data, particularly in combination with measurement data, may allow to reconstruct a part of a measurement procedure, may provide a combination of measurement data and identification data and may allow a data sorting.

Control software of the controller device may be particularly adapted in such a manner that, when a network problem has occurred, the controller device does not have to be completely reset with the consequence of all non-complete data being erased. Instead of this, a communication with the measurement device may be established to check whether designated data are still present for transmission.

In the measurement device, acquired measurement data may be read out in real time ("online"): that is continuously, and while the measurement is performed. Particularly after detection of a transmission error, it is also possible to read out a part of data of a data block that, for example, may be related to a particular part of a measurement. Furthermore, special firmware managing or administering the storage unit (for instance a ring buffer) may be provided in the measurement device. The measurement device according to an embodiment of the invention may be a (relatively) passive device that does not actively establish a connection with a controller device by itself and which in many cases does not detect an error by itself. In contrast to this, the communication between measurement device and controller device may be controlled and initiated by the controller device which may be realized as an active device and which may establish a connection to the measurement device and provide the latter with control demands.

In the following, further exemplary embodiments of the measurement device will be described. However, these embodiments also apply for the controller device, for the network communication system, for the method, for the computer-readable medium and for the program element.

The storage unit of the measurement device may be adapted to store acquired measurement data in a manner as to allow reconstructing the chronological order in which the measurement data are stored or have been stored. In other words, according to this embodiment, it is possible to unambiguously determine a temporal order of acquisition or storage of particular measurement data items or sets of data. This can be accomplished, for instance, by storing, for each item or for a group of acquired measurement data, a corresponding timing item (which may also be denoted as assigned chronology data) reflecting the acquisition or storing time of this particular item or group of acquired measurement data. Or, addresses of measurement data in the buffer storage unit may inherently include temporal information allowing to unambiguously derive a temporal order of acquiring or storing these data.

The storage unit of the measurement device may be a ring buffer, particularly for continuously storing and overwriting acquired measurement data in a circular manner. The term ring buffer may particularly denote a short-term storage area that stores streams of data as the data are waiting for further processing before they are transformed into output data. The ring buffer may act as a storage interface, storing information before it is passed to a processor or to the controller device. In the case of a ring buffer, data may be continuously stored and, when the memory capacity of the ring buffer is reached, then the "oldest" data are overwritten. For example, a data rate processed by the ring buffer may be 400 kB per second. A ring buffer may overwrite previously stored data by new data upon acquisition of the new data, thus permanently updating the stored content.

Particularly, the storage device may be adapted to overwrite oldest stored measurement data by newly received measurement data according to a "first in, first out" (FIFO) scheme, when no free memory is left in the storage unit. By taking this measure, it is ensured that the data stored in the storage unit always relates to recently measured data which are, with a relatively high probability, still of interest, whereas old data which is probably not needed any longer is no longer stored in the storage unit.

According to one embodiment, the provided measurement data may be "labelled" with a time stamp or other timing information, which allows retracing the chronology of the acquisition of the measurement data from a measurement environment to the storage unit.

The processor of the measurement device may be adapted to, upon receipt of a measurement data transmission request of the controller device, provide the controller device with a requested part of the stored measurement data. After a response from the measurement device to the data availability request, the controller device knows which data are still available for transmission in the storage unit of the measurement device. By providing a read pointer pointing to a desired portion or starting position of stored measurement data, the controller device may cause the measurement device to provide the controller device with the missing data.

The measurement device according to the invention may comprise a receptacle or receiving portion through which the storage capacity of the measurement device may be increased. A standard measurement device can be flexibly equipped with a storage unit being particularly appropriate for a particular application, for instance concerning a desired storage capacity and/or required read/write times. Thus, the implemented storage unit can be adjusted to a particular application, for instance to a particular type of a first storage unit is permanently provided in the measurement device. It is also possible that a first storage unit is permanently provided in the measurement device, and that, if more memory is required, a second storage unit may be removably inserted in the measurement device. By taking this measure, the storage amount can be flexibly adjusted to a particular application by properly selecting or replacing the second storage unit.

The processor may be adapted to receive control messages from the controller device for controlling the measurement device. In other words, the controlling device may act as a master and the measurement device may act as a slave so that the measurement device does not have to be equipped with sophisticated processing intelligence and can thus be manufactured with low effort.

The measurement device may be adapted to communicate with the controller device via at least one of a bus, a Local Area Network (LAN), a Control Area Network (CAN), HPIB (Hewlett Packard Interface Bus) or RS232.

In general, the communication between a measurement device and a controller device may be performed via any desired wireless or wired network.

An RS232 interface allows serial data transmission, that is to say data bits are transmitted one after the other on a line, in contrast to a parallel data transmission in which data bits may be transmitted simultaneously on different lines.

A Local Area Network (LAN) particularly denotes a computer network covering a local area, like a home, an office or a group of buildings such as a college. Such a LAN may particularly be realized as a wireless LAN which may or may not be connected to a wide area network (WAN) or the public internet.

HPIB is equivalent to GPIB denoting a General Purpose Interface Bus, particularly a transmission path with 8 bits transmitted in parallel according to IEEE 488.

The measurement device according to the invention may be adapted as at least one of a measurement device for performing a measurement in a coupled or connected measurement environment, a sensor device, a test device for testing a device under test (DUT), a device for chemical, biological and/or pharmaceutical analysis, and may include a separation system adapted for separating compounds of a sample. Further exemplary application fields of the measurement device according to the invention are gas chromatography, mass spectroscopy, UV spectroscopy, optical spectroscopy, IR spectroscopy, liquid chromatography, capillary electrophoresis, bioanalysis.

Thus, the measurement device can be a measurement device, which may perform any kind of measurement, wherein measurement data may be passed to a controller device.

The measurement device can also be any kind of sensor sensing any physical, chemical or other parameter like temperature, humidity, pressure, wherein such sensor data may be processed by a controller device.

Further, the measurement device can be realized as a test device for testing a DUT. For testing electronic devices, in particular integrated electronic circuits providing digital electronic output signals, a test or stimulus signal may be fed to an input of the DUT, and a response signal of the DUT may be evaluated by an automatic test equipment, for example by comparison with expected data.

Applications of the measurement device as a device for chemical, biological and/or pharmaceutical analysis, functions like (protein) purification, electrophoresis investigation of solutions, or chromatography investigations may be implemented with the measurement device. An example for such a chemical, biological and/or pharmaceutical measurement device is the 1100 high performance liquid chromatograph device of Agilent Technologies.

According to another exemplary embodiment of the present invention, the measurement device may be realized as a liquid separation system adapted for separating compounds of a liquid sample. Such a liquid separation system may comprise a solvent delivery unit adapted for pumping liquid, a separation unit adapted for separating compounds contained in the liquid sample, a detection unit that can measure the characteristics of the liquid going through it and that provides the measurement , data related to the separation and to results of the separation to the storage unit for storage.

The measurement device according to the invention may comprise a multi-connection interface adapted to connect the measurement device to more than one controller device for communication via the same physical connection. By connecting the measurement device to more than one controller device via one and the same interface, it is possible, when one of the connections is interrupted, that the measurement data transfer is carried out via the other transmission path. Further, this may allow to control the measurement device (for instance located at a customer site) from a local position (for instance by a computer located in the same laboratory) and simultaneously from a remote site (for instance by a computer located in a remote site). For instance, monitoring a measurement device by a remote technician may guarantee the user of the device proper functioning of the measurement device and may allow detecting potential problems with the measurement device or a need for maintenance of the device at an early point in time and before an actual failure occurs.

Referring to the multi-connection function, it may be possible that different control devices are provided with the measurement data with different data transmission velocity, that is different control device may receive measurement data with different data rate. This is possible since measurement data are stored on the mass storage device.

It is noted that a communication of a measurement device with more than one controller device may be performed via one or more interfaces of the measurement device.

Still referring to the described embodiment, the measurement device may comprise an identification unit adapted to identify, upon receipt of a message from one of the at least two controller devices and based on the message, an identity of the controller device which has sent the message. When more than one controller device communicate with the measurement device, particularly via a single communication interface, it may be advantageous that the measurement device knows which of controller devices is the initiator of a corresponding command or request. This can be realized in the frame of the TCP/IP standard, since a message transmitted according to this standard allows to identify the origin of this message.

In the following, further exemplary embodiments of the controller device will be described. However, these embodiments also apply for the measurement device, for the network system, for the method, for the computer-readable medium and for the program element.

The controller device may further comprise a measurement data request unit which may be adapted to, based on received information about measurement data available for transmission and based on a detection of an interruption, transmit a measurement data request to the measurement device requesting to transmit a part of measurement data lacking in the controller device due to the interruption. Thus, a corresponding portion of the data stored in the storage unit of the measurement device can be requested for transmission to the controller device, wherein read pointers may be used for indicating corresponding portions of the storage unit.

The controller device according to the invention may be adapted as a workstation. In the frame of this description, a "workstation" may denote any instance which can be connected to a measurement device and which may receive data. For instance, such a computer can be a conventional personal computer or can also be a sophisticated server computer. In principle, the work station can also be a mobile phone, a personal digital assistant or any device which allows control of the measurement device.

The workstation may comprise a Graphical User Interface (GUI). Such a graphical user interface may include a display device (like a cathode ray tube, a liquid crystal display, a plasma display device or the like) for displaying information to a human operator, like measurement data or measurement results derived from the measurement data by further processing in the workstation. Moreover, a graphical user interface may comprise an input device allowing a user to input data (like commands or instructions) or to provide the system with other data. Such an input device may include a keypad, a joystick, a trackball, or may even be a microphone of a voice recognition system. The GUI may allow a human user to communicate in a bidirectional manner with the workstation.

In the following, an exemplary embodiment of the network system will be described. However, this embodiment applies also for the measurement device, for the controller device, for the method, for the computer-readable medium and for the program element.

The controller device of the network system may be located at a remote position with respect to the measurement device. "Remote" in this context may particularly indicate that there is a relatively large distance between the controller device and the measurement device. For instance, both devices may be located in different cities. Spatially separating measurement device and controller device may allow that the measurement device may be located in an environment in which a controller device should not be located or can only be located with high effort. Examples for locations of a measurement device in which it may not be desirable to arrange also a controller device are laboratories requiring compliance with special laws or clean rooms for semiconductor investigations requiring absolutely contamination-free conditions. In other cases, it may be desirable that a measurement device is administered or monitored by a controller device of the manufacturer, wherein the measurement device is located at the customer side. Such a distributed architecture is enabled according to the invention.

### BRIEF DESCRIPTION OF DRAWINGS

Objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a network system comprising a measurement device and a controller device according to an exemplary embodiment of the invention.

Fig. 2 shows a flow diagram illustrating a method for operating a measurement device capable of performing a measurement according to an exemplary embodiment of the invention.

The illustration in the drawing is schematically.

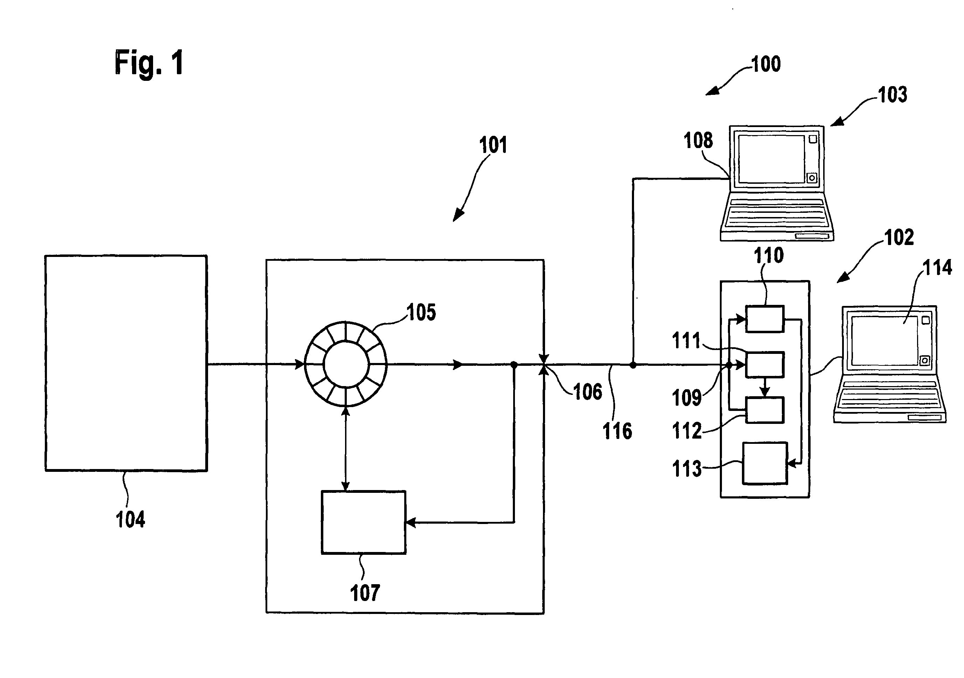

In the following, referring to Fig. 1, a network array 100 according to an exemplary embodiment of the invention will be described.

The network array 100 comprises a biochemical measurement device 101, a local controller device 102 and a remote controller device 103.

The biochemical measurement device 101 is adapted for performing a measurement in a measurement environment 104. The measurement environment 104 comprises a plurality of biochemical substances which are mixed, are brought in reaction with one another, are purified, are separated, and so on. A measurement performed in the measurement environment 104 yields measurement parameters like concentrations of components, presence or absence of different fractions of substances in an analyte, activity measurement data, or the like. Such measurement data related to the measurement performed in the measurement environment 104 are provided to a ring buffer 105 as a storage unit of the biochemical measurement device 101.

The ring buffer 105 stores acquired measurement data in a manner allowing to retrace a chronological order according to which the measurement data have been stored in the ring buffer 105. The ring buffer 105 is adapted for continuously storing and overwriting acquired measurement data in a circular manner, according to a "first in, first out" scheme. I.e., data which have been stored earlier in the ring buffer 105 are overwritten earlier than data which have been stored later.

The various measurement data are acquired in the measurement environment 104 during the measurement procedure, which may take some minutes. A sequence of signals is transmitted from the measurement environment 104 to the ring buffer 105. Via a communication interface 106 of the biochemical measurement device 101, the measurement data may be continuously transmitted from the ring buffer 105, in which these data are stored, to any of the controller devices 102, 103.

Further, the biochemical measurement device 105 comprises a microprocessor 107 which is adapted for accessing the ring buffer 105 and to communicate, via the communication interface 106, with any of the controller devices 102, 103. The processor 107 (central processing unit, CPU) is adapted to, upon receipt of an availability request of one of the controller devices 102, 103, provide the corresponding controller device 102, 103 with information about measurement data currently stored in the ring buffer 105 and therefore still available for transmission. For this purpose, the processor 107 may evaluate data stored in the ring buffer 105 and may evaluate the availability request.

The ring buffer 105 has a given storage capacity. The ring buffer continuously stores measurement data provided by the measurement environment 104. However, when the ring buffer 105 storage capacity is exhausted, "old" measurement data is overwritten by "newly" acquired measurement data. Upon receipt of a measurement data transmission request of one of the controller devices 102, 103, the microprocessor 107 may provide the corresponding controller devices 102, 103 with the requested part of the stored measurement data, provided that the requested part is still stored in the ring buffer 105. If the requested measurement data is already overwritten, the processor 107 may send a message to the corresponding controller device 102, 103 indicating that the requested measurement data is no more available.

The biochemical measurement device 101 is connected via the communication interface 106 and via the internet 116 to a corresponding interface 108, 109 of the respective controller device 102, 103. The communication interface 106 of the biochemical measurement device 101 is a multi-connection interface which allows connection to both controller devices 102, 103. When a communication message is sent by one of the controller devices 102, 103, for instance according to the TCP/IP standard, the microprocessor 107 may determine the identification of the respective one of the controller devices 102 or 103 being the initiator of this message. Thus, it is possible for the microcontroller 107 to determine which one of the controller devices 102, 103 has initiated a communication or has requested a data package.

The controller device 103 is located remotely from the biochemical measurement device 101 (located at a customer site), namely at a manufacturer site. In other words, the biochemical measurement device 101 being located at a customer site can be controlled remotely from a controller device 103 at a manufacturer site. By taking this measure, it is possible that the manufacturer monitors the functionality of the biochemical measurement device 101 to ensure a proper function.

In contrast to this, the controller device 102 is arranged locally, that is to say directly neighbored to the biochemical measurement device 101 at the customer site.

In the following, the controller device 102 will be described in more detail.

The controller device 102 controls the connected biochemical measurement device 101 during performing the measurement and comprises a receiving unit 110 for receiving measurement data transmitted from the ring buffer 105 of the biochemical measurement device 101 via the communication interface 106 and the internet 107. A transmission interruption detecting unit 111 is provided as well with the data flow from the internet 107 and is capable of detecting an interruption during the transmission of the measurement data from the biochemical measurement device 101 to the controller device 102. When such an interruption of the network communication via the internet 107 is recognized by the transmission interruption detection unit 110, a message encoding the fact that this event has occurred is supplied to an availability request unit 112.

Consequently, the availability request unit 112 transmits an availability request to the biochemical measurement device 101 requesting information about measurement data available for transmission. In other words, when it is detected that a part of the data has not been transmitted correctly, for instance due to an interruption of the communication path between the measurement device 101 and the controller device 102, the detection unit 111 triggers the availability request unit 112 to send an availability request to the processor 107.

When the processor 107 receives the availability request, it communicates with the ring buffer 105 to check whether required information is still stored in the storage device 105. This check is carried out based on the chronology according to which the measurement data is stored in the ring buffer 105.

The processor 107 may then, upon receipt of a measurement data transmission request of the controller device 102, provide the controller device 102 with a requested part of the stored measurement data. This data is sent, via the communication interface 106 and the internet 107 to the receiving unit 110.

The controller device 102 further comprises a processor 113 which is provided with the measurement data from the receiving unit 110 and which is capable of further processing these data. A result of this processing can be displayed as a measurement result on a display 114 of the controller device 102. Further, a keypad 115 allows a user to interact with the controller device 102, and via the internet 107, with the measurement device 101.

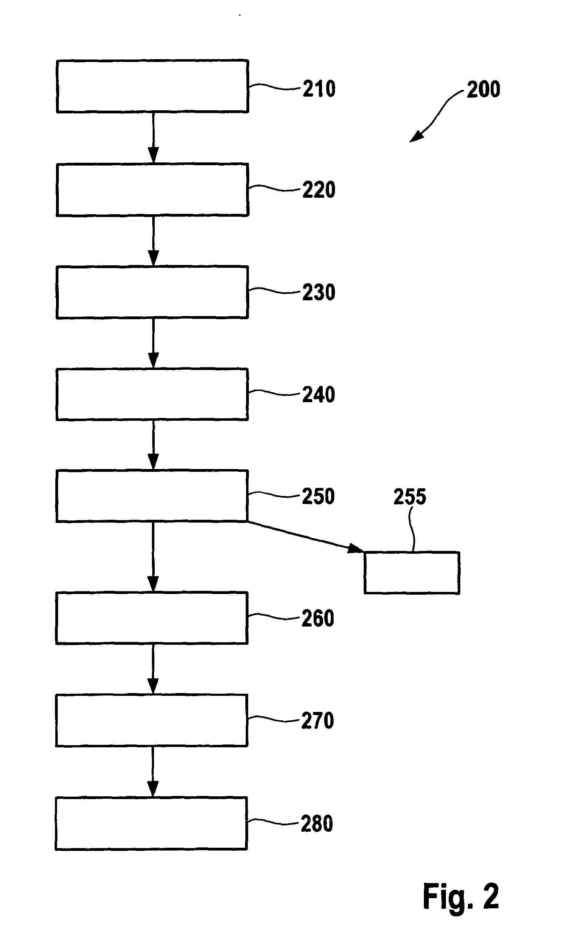

In the following, referring to Fig. 2, a flow diagram 200 illustrating a method for operating a measurement device capable of performing a measurement according to an exemplary embodiment of the invention will be described.

In a step 210, the measurement device stores measurement data which have been acquired by the measurement device. These measurement data may further be transmitted, in a step 220, from the measurement device to a controller device.

However, during this transmission of a continuous data stream from the measurement device to the controller device, an error may occur. Such an error may be due to network problems or a problem in the measurement device and/or the controller device. When such an error in the transmission channel between measurement device and controller device occurs, this error may be detected in a step 230, particularly by the controller device.

After having detected such an error, an availability request is sent, in a step 240, from the controller device to the measurement device including a query which data (acquired or stored during the measurement procedure) are still available for transmission from the measurement device to the controller device.

The measurement device then checks, in a step 250, whether and which data are still available in a cash storage unit or a buffer and provides the controller device with information about available data.

In more detail, when none of the data requested with the availability request are still available in the measurement device, a corresponding message is sent to the controller device in step 255, and the method is terminated. Otherwise, a message is sent to the controller device indicating that and which data are still available for transmission, and the method continues in step 260.

In a step 260, a sent data request can be transmitted from the controller device to the measurement device requesting a particular portion of data which are still available for transmission in the measurement device. In a step 270, these requested data are sent from the measurement device to the storage device to close the gap of missing data.

Consequently, the controller device has a complete data set to its disposal and, in a step 280, may process this complete data set to generate a measurement result.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. A controller device (102) for controlling a coupled measurement device (101) for performing a measurement, the controller device (102) comprising
a receiving unit (110) for receiving measurement data transmitted from the measurement device (101), wherein the measurement device (101) comprises:
• a storage unit (105) adapted for storing acquired measurement data in a manner allowing to retrace a chronological order of storing the measurement data, wherein the measurement data is transmittable to the controller device (102), and
• a processor (107) which is adapted to, upon receipt of an availability request of the controller device (102) related to measurement data stored in the storage device (105) and available for transmission, provide the controller device (102) with information in accordance with the availability request based on the order,
• wherein the storage unit (105) is adapted to store the measurement data until its capacity is exhausted and to overwrite the measurement data then, and the controller device (102) may have random access to any part of the data stored in the storage unit (105);
wherein the controller device (102) is **characterized by**
a transmission interruption detection unit (111) for detecting an interruption during transmission of measurement data from the measurement device (101),
an availability request unit (112) adapted to, in case of detection of an interruption by the transmission interruption detection unit (111), transmit the availability request to the measurement device (101) requesting information about measurement data available for transmission, and
a measurement data request unit (112) adapted to, based on received information about measurement data available for transmission and based on detection of an interruption, transmit a measurement data request to the measurement device (101) requesting to transmit particular measurement data lacking in the controller device (102) due to the interruption.

2. The controller device (102) of the preceding claim, wherein
the controller device (102) is adapted as a workstation.

3. A network system (100), comprising
a measurement device (101) for performing a measurement, the measurement device (101) comprising
a storage unit (105) adapted for storing acquired measurement data in a manner allowing to retrace a chronological order of storing the measurement data, wherein the measurement data is transmittable to a coupled controller device (102), and
a processor (107) which is adapted to, upon receipt of an availability request of the controller device (102) related to measurement data stored in the storage device (105) and available for transmission, provide the controller device (102) with information in accordance with the availability request based on the order,
wherein the storage unit (105) is adapted to store the measurement data until its capacity is exhausted and to overwrite the measurement data then, and the controller device (102) may have random access to any part of the data stored in the storage unit (105);
a controller device (102) according to claim 1 or 2 for controlling the measurement device (101) coupled to the controller device (102).

4. The network system (100) of the preceding claim, wherein the measurement device (101) comprises at least one of the following features:
the storage unit (105) is adapted to store acquired measurement data indicative of a chronological order of storing the measurement data;
the storage unit (105) comprises a ring buffer for continuously storing and
overwriting acquired measurement data in a circular manner;
the storage unit (101) is adapted to overwrite stored measurement data by newly received measurement data according to a first in, first out scheme, when no free memory is left in the storage unit (105);
a receptacle in which the storage unit (105) is removably inserted.

5. The network system (100) of claim 3 or 4, wherein the measurement device (101) comprises at least one of the following features:
the processor (107) is adapted to, upon receipt of a measurement data transmission request of the controller device (102), provide the controller device (102) with a requested part of the stored measurement data;
the processor (107) is adapted to receive control messages from the controller device (102) for controlling the measurement device (101);
the measurement device (101) is adapted to communicate with the controller device (102) via at least one of a bus, a local area network, a controller area network, the internet (116), HPIB and RS232;
the measurement device (101) is adapted as at least one of a measurement device for performing a measurement in a coupled measurement environment, a sensor device, a test device for testing a device under test, a device for chemical, biological and/or pharmaceutical analysis, and a fluid separation system adapted for separating compounds of a fluid.

6. The network system (100) of any one of the claims 3-5, wherein the measurement device (101) comprises
comprising a multi-connection interface (106) adapted to couple the measurement device (101) to at least two controller devices (102, 103) for communicating with the at least two controller devices (102, 103), particularly via a common physical coupling.

7. The network system (100) of the preceding claim, wherein the measurement device (101) comprises
an identification unit adapted to identify, upon receipt of a message from one of the at least two controller devices (102, 103) and based on the message, an identity of the controller device (102, 103) which has sent the message.

8. The network system (100) of any one of the claims 3-7,
wherein the controller device (103) is located at a remote position with respect to the measurement device (101).

9. A method (200) of operating a measurement device (101), capable of performing a measurement, and a coupled controller device (102) is the method (200) comprising:
the measurement device (101) stores (210) acquired measurement data in a manner allowing to retrace chronological order of storing the measurement data, wherein the measurement data is transmittable to the coupled controller device (102);
the measurement device (101) stores (210) the acquired measurement data until storage capacity is exhausted and overwrites the measurement data then, wherein the controller device (102) may have random access to any part of the data stored in the storage unit (105);
upon detecting an interruption during the transmission of measurement data from the measurement device (101) the controller device (102) transmits an availability request to the measurement device (101) requesting information about measurement data available for transmission,
upon receiving (240)the availability request, the measurement device (101) provides (250) the controller device (102) with information in accordance with the availability request based on the order, and
based on received information about measurement data available for transmission and based on detection of an interruption, the controller device (102) transmits a measurement data request to the measurement device (101) requesting to transmit particular measurement data lacking in the controller device (102) due to the interruption.

10. A computer-readable medium, in which a computer program of operating a measurement device (101) and a coupled controller device (102) is stored, or a program element of operating a measurement device (101), and a coupled controller device (102) which computer program or program element, when being executed by a processor, is adapted to control or carry out the method of the preceding claim.

## Patentansprüche

1. Steuereinheit (102) zur Steuerung einer angeschlossenen Messeinrichtung (101) zum Durchführen einer Messung, wobei die Steuereinheit (102) Folgendes aufweist:
eine Empfangseinheit (110) zum Empfangen von der Messeinrichtung (101) übertragener Messdaten, wobei die Messeinrichtung (101) Folgendes aufweist:
• eine Speichereinheit (105), die zum Speichern gewonnener Messdaten in der Weise eingerichtet ist, dass eine zeitliche Reihenfolge der Speicherung der Messdaten zurückverfolgt werden kann, wobei die Messdaten an die Steuereinheit (102) übertragen werden können, und
• einen Prozessor (107), der so eingerichtet ist, dass er nach dem Empfang einer Verfügbarkeitsanforderung der Steuereinheit (102) bezüglich der in der Speichereinheit (105) gespeicherten und zur Übertragung bereitstehenden Messdaten die Steuereinheit (102) in der von der Verfügbarkeitsanforderung angegebenen Reihenfolge mit Daten versorgt,
• wobei die Speichereinheit (105) so eingerichtet ist, dass sie die Messdaten so lange speichert, bis die Speicherkapazität erschöpft ist, und dann die Messdaten überschreibt, und wobei die Steuereinheit (102) auf jeden Teil der in der Speichereinheit (105) gespeicherten Daten direkt zugreifen kann;
wobei die Steuereinheit (102) **gekennzeichnet ist durch**
eine Übertragungsunterbrechungs-Erkennungseinheit (111) zum Erkennen einer Unterbrechung während der Übertragung von Messdaten von der Messeinrichtung (101),
eine Verfügbarkeits-Anforderungseinheit (112), die dafür eingerichtet ist, beim Erkennen einer Unterbrechung **durch** die Übertragungsunterbrechungs-Erkennungseinheit (111) die Verfügbarkeitsanforderung an die Messeinrichtung (101) zu übertragen, um Informationen über die zur Übertragung verfügbaren Messdaten anzufordern, und
eine Messdaten-Anforderungseinheit (112), die so eingerichtet ist, dass sie als Reaktion auf empfangene Informationen über zur Übertragung verfügbare Messdaten und als Reaktion auf die Erkennung einer Unterbrechung eine Messdatenanforderung an die Messeinrichtung (101) überträgt, um die Übertragung bestimmter Messdaten anzufordern, die aufgrund der Unterbrechung in der Steuereinheit (102) fehlen.

2. Steuereinheit (102) nach dem vorhergehenden Anspruch, wobei
die Steuereinheit (102) als Arbeitsplatzrechner eingerichtet ist.

3. Vernetztes System (100), das Folgendes aufweist:
eine Messeinrichtung (101) zum Durchführen einer Messung, wobei die Messeinrichtung (101) Folgendes aufweist:
eine Speichereinheit (105), die zum Speichern gewonnener Messdaten in der Weise eingerichtet ist, dass eine zeitliche Reihenfolge der Speicherung der Messdaten zurückverfolgt werden kann, wobei die Messdaten an die Steuereinheit (102) übertragen werden können, und
einen Prozessor (107), der so eingerichtet ist, dass er nach dem Empfang einer Verfügbarkeitsanforderung der Steuereinheit (102) bezüglich der in der Speichereinheit (105) gespeicherten und zur Übertragung bereitstehenden Messdaten die Steuereinheit (102) in der von der Verfügbarkeitsanforderung angegebenen Reihenfolge mit Daten versorgt,
wobei die Speichereinheit (105) so eingerichtet ist, dass sie die Messdaten so lange speichert, bis die Speicherkapazität erschöpft ist, und dann die Messdaten überschreibt, und wobei die Steuereinheit (102) auf jeden Teil der in der Speichereinheit (105) gespeicherten Daten direkt zugreifen kann;
eine Steuereinheit (102) nach Anspruch 1 oder 2 zum Steuern der mit der Steuereinheit (102) gekoppelten Messeinrichtung (101).

4. Vernetztes System (100) nach dem vorhergehenden Anspruch, bei dem die Messeinrichtung (101) mindestens eines der folgenden Merkmale aufweist:
die Speichereinheit (105) ist zum Speichern gewonnener Messdaten eingerichtet, die durch eine zeitliche Reihenfolge zum Speichern der Messdaten **gekennzeichnet** sind;
die Speichereinheit (105) weist einen Ringpuffer zum umlaufenden kontinuierlichen Speichern und Überschreiben gewonnener Messdaten auf;
die Speichereinheit (101) ist zum Überschreiben gespeicherter Messdaten durch neu empfangene Messdaten nach dem FIFO-Prinzip (first in, first out) eingerichtet, wenn in der Speichereinheit (105) kein Speicherplatz mehr frei ist;
eine Aufnahme, in welche die Speichereinheit (105) entnehmbar eingesetzt wird.

5. Vernetztes System (100) Anspruch 3 oder 4, bei dem die Messeinrichtung (101) mindestens eines der folgenden Merkmale aufweist:
der Prozessor (107) ist dafür eingerichtet, nach dem Empfang einer Messdaten-Übertragungsanforderung von der Steuereinheit (102) die Steuereinheit (102) mit einem angeforderten Teil der gespeicherten Messdaten zu versorgen;
der Prozessor (107) ist dafür eingerichtet, Steuernachrichten von der Steuereinheit (102) zum Steuern der Messeinrichtung (101) zu empfangen;
die Messeinrichtung (101) ist dafür eingerichtet, Daten mindestens über einen Bus, ein lokales Netz, ein Nahsteuemetz, das Internet (116), HPIB oder RS232 mit der Steuereinheit (102) auszutauschen;
die Messeinrichtung (101) ist als mindestens eine der folgenden Messeinrichtungen zum Durchführen einer Messung in einer gekoppelten Messumgebung geeignet: als Sensoreinrichtung, als Testeinrichtung zum Testen einer zu testenden Einheit, als Einrichtung für chemische, biologische und/oder pharmazeutische Analysen oder als Flüssigkeitstrennsystem zum Trennen von Verbindungen in einer Flüssigkeit.

6. Vernetztes System (100) nach einem der Ansprüche 3 bis 5, bei dem die Messeinrichtung Folgendes aufweist:
eine Schnittstelle (106) mit mehreren Anschlüssen zum Verbinden der Messeinrichtung (101) mit mindestens zwei Steuereinheiten (102, 103) insbesondere über eine normale physische Verbindung zum Austauschen von Daten mit den mindestens zwei Steuereinheiten (102, 103).

7. Vernetztes System (100) nach dem vorhergehenden Anspruch, bei dem die Messeinrichtung (101)
eine Erkennungseinheit aufweist, die zum Erkennen einer Identität der Steuereinheit (102, 103), welche eine Nachricht gesendet hat, nach dem Empfang der Nachricht von einer der mindestens zwei Steuereinheiten (102, 103) und aufgrund der Nachricht eingerichtet ist.

8. Vernetztes System (100) nach einem der Ansprüche 3 bis 7,
bei dem die Steuereinheit (103) an einer von der Messeinrichtung (101) entfernten Position untergebracht ist.

9. Verfahren (200) zum Bedienen einer Messeinrichtung (101) und einer mit dieser verbundenen Steuereinheit (102) zum Durchführen einer Messung, wobei das Verfahren (200) Folgendes aufweist:
die Messeinrichtung (101) speichert (210) gewonnene Messdaten in einer Weise, dass eine zeitliche Reihenfolge der Speicherung der Messdaten zurückverfolgt werden kann, wobei die Messdaten an die angeschlossene Steuereinheit (102) übertragen werden können;
die Messeinrichtung (101) speichert (210) die Messdaten so lange, bis die Speicherkapazität erschöpft ist, und überschreibt dann die Messdaten, wobei die Steuereinheit (102) auf jeden Teil der in der Speichereinheit (105) gespeicherten Daten direkt zugreifen kann;
nach dem Erkennen einer Unterbrechung während der Übertragung von Messdaten von der Messeinrichtung (101) überträgt die Steuereinheit (102) eine Verfügbarkeitsanforderungen an die Messeinrichtung (101), um Informationen über die zur Übertragung verfügbaren Messdaten anzufordern,
nach dem Empfang (240) der Verfügbarkeitsanforderung liefert (250) die Messeinrichtung (101) Informationen gemäß der Verfügbarkeitsanforderung entsprechend der Reihenfolge an die Steuereinheit (102), und
als Reaktion auf empfangene Informationen über zur Übertragung verfügbare Messdaten und als Reaktion auf das Erkennen einer Unterbrechung überträgt die Steuereinheit (102) eine Messdatenanforderung an die Messeinrichtung (101), um die Übertragung bestimmter Messdaten anzufordern, die aufgrund der Unterbrechung in der Steuereinheit (102) fehlen.

10. Computerlesbares Medium, in welchem ein Computerprogramm zum Bedienen einer Messeinrichtung (101) und einer mit dieser verbundenen Steuereinheit (102) oder ein Programmelement zum Bedienen einer Messeinrichtung (101) und einer mit dieser verbundenen Steuereinheit (102) gespeichert ist, wobei das Computerprogramm oder das Programmelement dafür eingerichtet ist, bei Ausführung durch einen Prozessor das Verfahren nach dem vorgehenden Anspruch zu steuern oder auszuführen.

## Revendications

1. Dispositif de commande (102) pour commander un dispositif de mesure (101) connecté pour effectuer une mesure, le dispositif de commande (102) comprenant
une unité de réception (110) pour recevoir des données de mesure transmises depuis le dispositif de mesure (101), dans lequel le dispositif de mesure (101) comprend :
• une unité de mémorisation (105) à même de mémoriser des données de mesure acquises de manière à permettre de retracer un ordre chronologique de mémorisation des données de mesure, dans laquelle les données de mesure sont transmissibles au dispositif de commande (102), et
• un dispositif de traitement (107) qui est à même, lors de la réception d'une demande de disponibilité du dispositif de commande (102) se rapportant à des données de mesure mémorisées dans le dispositif de mémorisation (105) et prêtes à être transmises, de fournir au dispositif de commande (102) des informations selon la demande de disponibilité sur la base de l'ordre ;
• dans lequel l'unité de mémorisation (105) est à même de mémoriser les données de mesure jusqu'à ce que sa capacité soit épuisée et, alors, d'écraser les données de mesure, et le dispositif de commande (102) peut disposer d'un accès aléatoire à n'importe quelle partie des données mémorisées dans l'unité de mémorisation (105) ;
dans lequel le dispositif de commande (102) est **caractérisé par**
une unité de détection d'interruption de transmission (111) pour détecter une interruption pendant une transmission de données de mesure depuis le dispositif de mesure (101) ;
une unité de demande de disponibilité (112) à même, en cas de détection d'une interruption par l'unité de détection d'interruption de transmission (111), de transmettre la demande de disponibilité au dispositif de mesure (101) demandant des informations quant aux données de mesure prêtes à être transmises, et
une unité de demande de données de mesure (112) à même, sur la base d'informations reçues quant aux données de mesure prêtes à être transmises et sur la base de la détection d'une interruption, de transmettre une demande de données de mesure au dispositif de mesure (101) demandant de transmettre des données de mesure particulières manquant dans le dispositif de commande (102) en raison de l'interruption.

2. Dispositif de commande (102) suivant la revendication précédente, dans lequel
le dispositif de commande (102) est adapté sous la forme d'un poste de travail.

3. Système de réseau (100), comprenant
un dispositif de mesure (101) pour effectuer une mesure, le dispositif de mesure (101) comprenant
une unité de mémorisation (105) à même de mémoriser des données de mesure acquises de manière à permettre de retracer un ordre chronologique de mémorisation des données de mesure, dans laquelle les données de mesure sont transmissibles à un dispositif de commande (102) connecté, et
un dispositif de traitement (107) qui est à même, lors de la réception d'une demande de disponibilité du dispositif de commande (102) se rapportant à des données de mesure mémorisées dans le dispositif de mémorisation (105) et prêtes à être transmises, de fournir au dispositif de commande (102) des informations selon la demande de disponibilité sur la base de l'ordre ;
dans lequel l'unité de mémorisation (105) est à même de mémoriser les données de mesure jusqu'à ce que sa capacité soit épuisée et, alors, d'écraser les données de mesure, et le dispositif de commande (102) peut disposer d'un accès aléatoire à n'importe quelle partie des données mémorisées dans l'unité de mémorisation (105) ;
un dispositif de commande (102) suivant la revendication 1 ou 2 pour commander le dispositif de mesure (101) connecté au dispositif de commande (102).

4. Système de réseau (100) suivant la revendication précédente, dans lequel le dispositif de mesure (101) comprend au moins une des particularités suivantes :
l'unité de mémorisation (105) est à même de mémoriser des données de mesure acquises indicatives d'un ordre chronologique de mémorisation des données de mesure ;
l'unité de mémorisation (105) comprend un tampon en anneau pour mémoriser et écraser en continu des données de mesure acquises de manière circulaire ;
l'unité de mémorisation (101) est à même d'écraser des données de mesure mémorisées par des données de mesure reçues récemment selon un système premier entré, premier sorti, lorsqu'il ne reste plus de mémoire libre dans l'unité de mémorisation (105) ;
un réceptacle dans lequel l'unité de mémorisation (105) est insérée de manière amovible.

5. Système de réseau (100) suivant la revendication 3 ou 4, dans lequel le dispositif de mesure (101) comprend au moins une des particularités suivantes :
le dispositif de traitement (107) est à même, lors de la réception d'une demande de transmission de données de mesure du dispositif de commande (102), de fournir au dispositif de commande (102) une partie demandée des données de mesure mémorisées ;
le dispositif de traitement (107) est à même de recevoir des messages de commande du dispositif de commande (102) pour commander le dispositif de mesure (101) ;
le dispositif de mesure (101) est à même de communiquer avec le dispositif de commande (102) par le biais d'au moins un des éléments du groupe comprenant un bus, un réseau local, un réseau CAN (Controller Area Network), l'Internet (116), un bus HPIB ou une interface RS232 ;
le dispositif de mesure (101) est adapté sous la forme d'au moins un des éléments du groupe comprenant un dispositif de mesure pour effectuer une mesure dans un environnement de mesure connecté, un dispositif capteur, un dispositif d'essai pour tester un dispositif en essai, un dispositif d'analyse chimique, biologique et/ou pharmaceutique, et un système de séparation de fluide à même de séparer les composés d'un fluide.

6. Système de réseau (100) suivant l'une quelconque des revendications 3 à 5, dans lequel le dispositif de mesure (101) comprend
une interface de connexion multiple (106) à même de connecter le dispositif de mesure (101) à au moins deux dispositifs de commande (102, 103) pour communiquer avec les au moins deux dispositifs de commande (102, 103), en particulier par le biais d'une connexion physique commune.

7. Système de réseau (100) suivant la revendication précédente, dans lequel le dispositif de mesure (101) comprend
une unité d'identification à même d'identifier, lors de la réception d'un message provenant d'un des au moins deux dispositifs de commande (102, 103) et sur la base du message, une identité du dispositif de commande (102, 103) qui a envoyé le message.

8. Système de réseau (100) suivant l'une quelconque des revendications 3 à 7,
dans lequel le dispositif de commande (103) se trouve dans une position distante par rapport au dispositif de mesure (101).

9. Procédé (200) permettant de faire fonctionner un dispositif de mesure (101), capable d'effectuer une mesure, et un dispositif de commande (102) connecté, le procédé (200) comprenant :
le dispositif de mesure (101) mémorise (210) des données de mesure acquises de manière à permettre de retracer un ordre chronologique de mémorisation des données de mesure, dans lequel les données de mesure sont transmissibles au dispositif de commande (102) connecté ;
le dispositif de mesure (101) mémorise (210) les données de mesure acquises jusqu'à ce que la capacité de mémorisation soit épuisée et, alors, écrase les données de mesure, dans lequel le dispositif de commande (102) peut disposer d'un accès aléatoire à n'importe quelle partie des données mémorisées dans l'unité de mémorisation (105) ;
lors de la détection d'une interruption pendant la transmission de données de mesure depuis le dispositif de mesure (101), le dispositif de commande (102) transmet une demande de disponibilité au dispositif de mesure (101) demandant des informations quant aux données de mesure prêtes à être transmises ;
lors de la réception (240) de la demande de disponibilité, le dispositif de mesure (101) fournit (250) au dispositif de commande (102) des informations selon la demande de disponibilité sur la base de l'ordre, et
sur la base d'informations reçues quant aux données de mesure prêtes à être transmises et sur la base de la détection d'une interruption, le dispositif de commande (102) transmet une demande de données de mesure au dispositif de mesure (101) demandant de transmettre des données de mesure particulières manquant dans le dispositif de commande (102) en raison de l'interruption.

10. Support lisible par ordinateur, dans lequel un programme informatique permettant de faire fonctionner un dispositif de mesure (101) et un dispositif de commande (102) connecté est mémorisé, ou un élément de programme permettant de faire fonctionner un dispositif de mesure (101) ou un dispositif de commande (102) connecté, lequel programme informatique ou élément de programme, lorsqu'il est exécuté par un dispositif de traitement, est à même de commander ou d'exécuter le procédé suivant la revendication précédente.
